# EUROPEAN PATENT APPLICATION

(11) **EP 4 799 799 A1**
(43) Date of publication of application: **02.09.2026**
(21) Application number: 25227565.6
(22) Date of filing: 30.12.2025
(51) Int. Cl.: B29C 70/32, B29C 70/54, B29C 70/86, F17C 1/00, B29B 15/12

(54) **MANUFACTURING DEVICE AND MANUFACTURING METHOD FOR PRESSURE TANK**

(30) Priority: 26.02.2025 JP 2025029382
(71) Applicant: Toyota Jidosha Kabushiki Kaisha, Toyota-shi, Aichi-ken 471-8571 (JP)
(72) Inventor: KATO, Kei, Toyota-shi, 471-8571 (JP)
(74) Representative: TBK

(57) **Abstract**

A manufacturing device configured to manufacture a pressure tank by winding a fiber bundle around a surface of a liner that is a hollow body includes an impregnation mechanism configured to impregnate the fiber bundle with resin before the fiber bundle is wound around the liner. The impregnation mechanism includes: a first surface along which the resin is supplied to the fiber bundle before the fiber bundle is wound around the liner; and a second surface that faces the first surface and sandwiches the fiber bundle between the first surface and the second surface before the fiber bundle is wound around the liner.

## Description

### BACKGROUND OF THE INVENTION

### 1. Field of the Invention

The technology disclosed in the present specification relates to a manufacturing device and a manufacturing method for a pressure tank.

### 2. Description of Related Art

Japanese Unexamined Patent Application Publication (Translation of PCT Application) No. 2019-507850 (JP 2019-507850 A) discloses a tank manufacturing method including producing a resinated braided layer on a liner. According to JP 2019-507850 A, a braiding machine is provided with a conical resin cone to be in contact with the back side of fibers gathered from a braiding ring toward the liner. Resin in grooves of the resin cone coats and/or impregnates the fibers before they are wound around the liner.

### SUMMARY OF THE INVENTION

As described in JP 2019-507850 A, each fiber is impregnated with resin immediately before being wound around the liner in the process of being fed toward the liner, and each of the fibers shown in JP 2019-507850 A is a fiber bundle formed by gathering a plurality of fibers. Hitherto, when resin is impregnated into the fiber bundle immediately before it is wound around the liner, the resin adheres to the surface of the fiber bundle, but the resin does not penetrate sufficiently into the spaces between the fibers inside the fiber bundle. If the fiber bundles are not sufficiently impregnated with the resin, many gaps called voids will be generated in the fiber layer formed by winding the fiber bundles around the liner. The presence of voids causes a decrease in strength of the tank.

The present specification discloses a manufacturing device configured to manufacture a pressure tank by winding a fiber bundle around a surface of a liner that is a hollow body. The manufacturing device includes an impregnation mechanism configured to impregnate the fiber bundle that is a bundle of a plurality of fibers with resin before the fiber bundle is wound around the liner. The impregnation mechanism includes: a first surface along which the resin is supplied to the fiber bundle before the fiber bundle is wound around the liner; and a second surface that faces the first surface and sandwiches the fiber bundle between the first surface and the second surface before the fiber bundle is wound around the liner.

The present specification discloses a manufacturing method for manufacturing a pressure tank by winding a fiber bundle around a surface of a liner that is a hollow body. The manufacturing method includes: impregnating the fiber bundle that is a bundle of a plurality of fibers with resin; and winding the fiber bundle impregnated with the resin around the surface of the liner. The impregnating includes causing the fiber bundle to pass between a first surface along which the resin is supplied to the fiber bundle and a second surface that faces the first surface to sandwich the fiber bundle between the first surface and the second surface.

In each of the above device and the above method, the fiber bundle before it is wound around the liner is sandwiched between the first surface and the second surface while being supplied with the resin. Therefore, the resin having pressure by being sandwiched between the first surface and the second surface penetrates into the fiber bundle from the surface of the fiber bundle, and the resin is sufficiently impregnated into the fiber bundle. Thus, the generation of voids in a fiber layer formed by winding the fiber bundle around the liner is suppressed, and the strength of the pressure tank is improved.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a simplified diagram of a manufacturing device;
FIG. 2 is a simplified sectional view of an impregnation mechanism;
FIG. 3 is a simplified sectional view of part of an impregnation mechanism of an example different from that in FIG. 2; and
FIG. 4 is a sectional image of a related-art pressure tank.

### DETAILED DESCRIPTION OF EMBODIMENTS

Main features of an embodiment described below will be listed below. These features can be combined in any way.

The manufacturing device disclosed in the present specification may further include a vibration mechanism configured to apply vibration to the resin in a region sandwiched between the first surface and the second surface.
With this configuration, the vibration mechanism applies vibration to the resin in the region sandwiched between the first surface and the second surface, thereby promoting the impregnation of the resin into the fiber bundle.

In the manufacturing device disclosed in the present specification, the first surface may have a plurality of resin supply ports, and the impregnation mechanism may be configured to supply the resin to the fiber bundle from the resin supply ports.
With this configuration, the resin is supplied to the fiber bundle from the resin supply ports formed in the first surface, thereby promoting uniform impregnation of the resin into the fiber bundle.

In the manufacturing device disclosed in the present specification, the resin supply ports may be arranged along a direction in which the fiber bundle moves toward the liner.
With this configuration, the resin is supplied to the fiber bundle from the resin supply ports formed in the first surface and arranged along the direction in which the fiber bundle moves toward the liner. This promotes uniform impregnation of the resin into the fiber bundle.

The present embodiment will be described with reference to the drawings. The drawings are merely an example, and the present embodiment is not limited to the contents shown in the drawings. Since the drawings are an example, the illustration may be omitted in part.

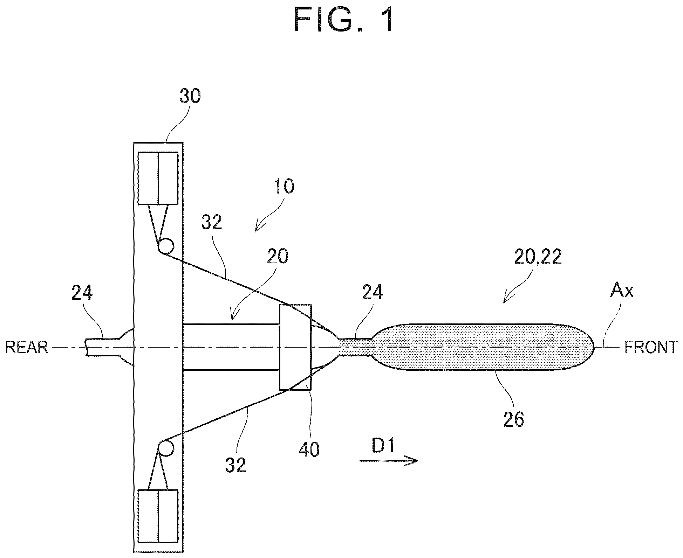

FIG. 1 is a simplified diagram of a manufacturing device 10 according to the present embodiment. The manufacturing device 10 is a device or system that can manufacture a pressure tank. The manufacturing device 10 performs a manufacturing method for the pressure tank. The manufacturing device 10 manufactures a pressure tank 22 by winding fiber bundles around the surface of a liner 20 that is a hollow body.

The liner 20 corresponds to an inner layer of the pressure tank 22. The liner 20 is, for example, a hollow cylindrical member, and is made of resin such as nylon. The pressure tank 22 is a high-pressure tank for storing a high-pressure fluid such as hydrogen.

The liner 20 is transported at a predetermined speed by a transport mechanism (not shown) along a first direction D1 in a state in which its longitudinal direction coincides with the first direction D1. FIG. 1 shows the manufacturing device 10 from a perspective perpendicular to the first direction D1. The transport mechanism for transporting the liner 20 may be regarded as part of the manufacturing device 10. The configuration of the transport mechanism is not particularly limited. The transport mechanism may be, for example, a mechanism that transports the liner 20 using a robot arm, or a mechanism that transports the liner 20 along a rail. The figure shows a central axis Ax of the liner 20 parallel to the first direction D1. The figure also shows the front and rear in the first direction D1.

In FIG. 1, a plurality of liners 20 is connected in series and continuously transported along the first direction D1. The liners 20 are connected in series with their internal spaces communicating with each other via pipes 24 having a diameter smaller than that of the liners 20. The liner 20 may be transported alone along the first direction D1.

The manufacturing device 10 includes a winding machine 30 and an impregnation mechanism 40. The winding machine 30 is a machine for winding linear elements having a predetermined tension in a mesh pattern around the surface of a winding target object, and includes bobbins etc. around which the linear elements are wound. The winding machine 30 is also called a braiding machine, a braider, etc. The linear element is herein a fiber bundle 32. The fiber bundle 32 is formed by gathering a plurality of fibers (e.g., carbon fibers) into a single strand. Although FIG. 1 shows only two fiber bundles 32 for simplification, the winding machine 30 is formed in an annular shape to surround the liner 20 about the central axis Ax, and supplies more than two fiber bundles 32 to the liner 20 from around the liner 20. The fiber bundles 32 moving toward the liner 20 are wound around the liner 20 while rotating about the central axis Ax in response to the motion of the winding machine 30 and being interwoven with each other as they approach the liner 20. General description of the winding machine 30 will be omitted below.

The impregnation mechanism 40 impregnates the fiber bundles 32 with resin R before the fiber bundles 32 are wound around the liner 20. The resin R is, for example, a thermosetting resin such as an epoxy resin. The impregnation mechanism 40 is formed in an annular shape to surround the liner 20 about the central axis Ax. The impregnation mechanism 40 may be regarded as a tubular body. The impregnation mechanism 40 is located forward of the winding machine 30. The liner 20 passes through the inside of the winding machine 30 and the inside of the impregnation mechanism 40 while being transported from rear to front along the first direction D1.

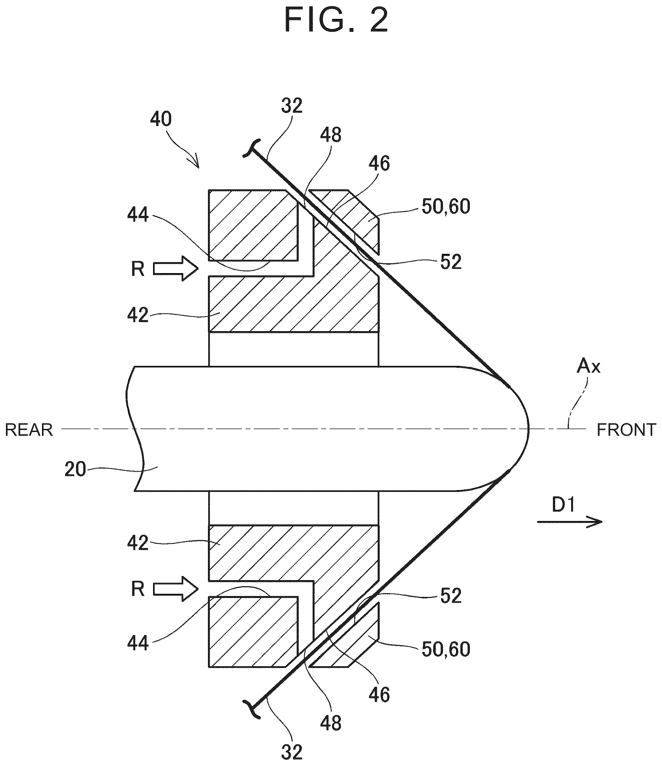

FIG. 2 shows a simplified cross section of the impregnation mechanism 40. In FIG. 2, the impregnation mechanism 40 is shown in an enlarged scale compared to FIG. 1. A resin supply path 44 is formed inside a body 42 of the impregnation mechanism 40. The front surface of the body 42 includes a first surface 46. The first surface 46 is an inclined surface extending along the movement direction of the fiber bundle 32 moving from the winding machine 30 toward the liner 20. At least part of the first surface 46 may be a curved surface.

The resin supply path 44 reaches the first surface 46. An opening of the resin supply path 44 in the first surface 46 is a resin supply port 48. The resin R is supplied to the resin supply path 44 by pressure from a pump (not shown). The resin R that has moved through the resin supply path 44 is supplied onto the first surface 46 from the resin supply port 48. Therefore, the first surface 46 having the resin supply port 48 acts to supply the resin R to the fiber bundle 32 before it is wound around the liner 20. When the first surface 46 is viewed from the front, the resin supply port 48 may be formed, for example, in an annular shape about the central axis Ax continuously or intermittently.

The impregnation mechanism 40 includes a second surface 52 that faces the first surface 46. As shown in FIG. 2, the impregnation mechanism 40 includes a lid 50 that covers the first surface 46 from the front. The lid 50 covers all or part of the first surface 46 from the front. As with the body 42 of the impregnation mechanism 40, the lid 50 is formed in an annular shape about the central axis Ax. That is, the surface of the lid 50 that faces the first surface 46 is the second surface 52. The resin R supplied onto the first surface 46 from the resin supply port 48 fills a region (clearance) between the first surface 46 and the second surface 52.

The fiber bundle 32 moving from the winding machine 30 toward the liner 20 passes between the first surface 46 and the second surface 52. From another perspective, the first surface 46 and the second surface 52 sandwich the fiber bundle 32 before it is wound around the liner 20. With this configuration, the fiber bundle 32 moving from the winding machine 30 toward the liner 20 is impregnated with the resin R when passing between the first surface 46 and the second surface 52. Although the first surface 46 and the second surface 52 sandwich the fiber bundle 32, the clearance between the first surface 46 and the second surface 52 is set to a width that does not hinder the movement of the fiber bundle 32. Therefore, the first surface 46 and the second surface 52 indirectly sandwich the fiber bundle 32 via the resin R that fills the clearance between the first surface 46 and the second surface 52.

In this way, the impregnation mechanism 40 performs an "impregnation step" in which the fiber bundle 32 is impregnated with the resin. The impregnation step includes a step of causing the fiber bundle 32 to pass between the first surface 46 and the second surface 52 to sandwich the fiber bundle 32 between the first surface 46 and the second surface 52. Each of the fiber bundles 32 impregnated with the resin R is wound around the surface of the liner 20. That is, the manufacturing device 10 including the winding machine 30 ultimately performs a "winding step" in which the fiber bundle 32 impregnated with the resin R is wound around the surface of the liner 20.

Through the winding step, a fiber layer 26 is formed on the surface of the liner 20. When the fiber bundle 32 is a bundle of carbon fibers, the fiber layer 26 is a carbon fiber reinforced plastics (CFRP) layer made of the carbon fibers and the resin R. In FIG. 1, for ease of understanding, the liner 20 after the fiber layer 26 has been formed, that is, the pressure tank 22, is shown in gray ahead of the position where the fiber bundle 32 is wound. In FIG. 1, the liner 20 before the fiber layer 26 is formed is also shown behind the position where the fiber bundle 32 is wound. The pressure tank 22 on which the fiber layer 26 has been formed is, for example, transported into a curing furnace (not shown) and cured at a predetermined curing temperature into a finished product.

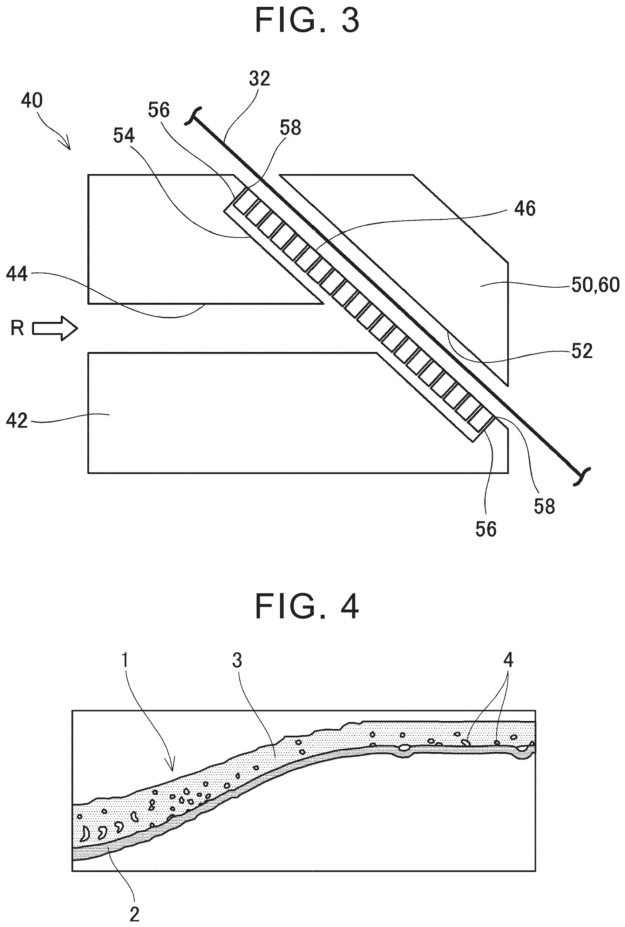

FIG. 4 is a sectional image of a related-art pressure tank 1, showing cross sections of a liner 2 and a fiber layer 3. The fiber layer 3 is formed on the outside of the liner 2. As described above, if the resin is not sufficiently impregnated into the fiber bundles, many voids 4 will be generated in the fiber layer 3 formed by winding the fiber bundles around the liner. The voids 4 cause a decrease in strength of the fiber layer 3 after curing, and furthermore a decrease in strength of the pressure tank 1.

To address this issue, in the present embodiment, the fiber bundle 32 before it is wound around the liner 20 is sandwiched between the first surface 46 and the second surface 52 while the resin R is being supplied to the fiber bundle 32. Therefore, the resin R having pressure by being sandwiched between the first surface 46 and the second surface 52 penetrates into the fiber bundle 32 from the surface of the fiber bundle 32, and the resin R is sufficiently impregnated between the fibers inside the fiber bundle 32. Thus, the generation of voids in the fiber layer 26 is suppressed, and the strength of the pressure tank 22 is improved.

The manufacturing device 10 may further include a vibration mechanism 60 that applies vibration to the resin R in the region sandwiched between the first surface 46 and the second surface 52. For example, the lid 50 can vibrate and substantially doubles as the vibration mechanism 60. The lid 50 serving as the vibration mechanism 60 includes, for example, an ultrasonic vibrator, and applies ultrasonic vibration to the resin R and the fiber bundle 32. Alternatively, the lid 50 serving as the vibration mechanism 60 may perform, instead of minute vibration such as ultrasonic vibration, a dynamic vibration operation in which the lid 50 repeatedly moves toward the first surface 46 and away from the first surface 46 at a predetermined period. In this way, the vibration mechanism 60 applies vibration to the resin R and the fiber bundle 32 in the region sandwiched between the first surface 46 and the second surface 52, thereby further promoting the impregnation of the resin R into the fiber bundle 32.

FIG. 3 shows a simplified cross section of part of an impregnation mechanism 40 according to an example different from that in FIG. 2. In FIG. 3, the cross section of the impregnation mechanism 40 is shown in an enlarged scale compared to FIG. 2. In FIG. 3, hatching indicating the cross section is omitted for ease of viewing. As shown in FIG. 3, the first surface 46 has a plurality of resin supply ports 58. The impregnation mechanism 40 may be configured to supply the resin R to the fiber bundle 32 from the resin supply ports 58. Each of the resin supply ports 58 has a smaller opening size in the direction in which the first surface 46 is inclined toward the liner 20 than the resin supply port 48 shown in FIG. 2. In FIG. 3, the resin supply ports 58 are arranged at least along the direction in which the first surface 46 is inclined toward the liner 20, that is, along the direction in which the fiber bundle 32 moves toward the liner 20.

In FIG. 3, the resin supply path 44 inside the body 42 includes an enlarged supply path 54 that extends along the first surface 46 before reaching the first surface 46. A plurality of nozzles 56 extends from the enlarged supply path 54 toward the first surface 46, and the openings of the nozzles 56 in the first surface 46 serve as the resin supply ports 58. The resin R that is spread from the resin supply path 44 to the enlarged supply path 54 under pressure from a pump (not shown) is supplied to the fiber bundle 32 from the resin supply ports 58 of the nozzles 56.

Since the nozzle 56 is a finer hole than the resin supply path 44 and the enlarged supply path 54, the resin R that passes through the nozzle 56 is ejected at high speed from the resin supply port 58 and moves toward the fiber bundle 32. Therefore, the resin R penetrates into the fiber bundle 32 at a plurality of locations while loosening the fiber bundle 32. Thus, the resin R is further uniformly and deeply impregnated into the fiber bundles 32. In the configuration shown in FIG. 3, the lid 50 can also have the function of the vibration mechanism 60.

Specific examples of the technology disclosed in the present specification have been described in detail above, but these are merely examples and do not limit the scope of the claims. The technology described in the claims includes various modifications and alterations of the specific examples given above. The technical elements described in the present specification or the drawings exhibit technical utility alone or in various combinations, and are not limited to the combinations described in the claims as filed. The technology illustrated in the present specification or the drawings achieves a plurality of objects simultaneously, and exhibits technical utility by achieving one of these objects.

## Claims

1. A manufacturing device configured to manufacture a pressure tank by winding a fiber bundle around a surface of a liner that is a hollow body,
the manufacturing device comprising an impregnation mechanism configured to impregnate the fiber bundle with resin before the fiber bundle is wound around the liner, wherein
the impregnation mechanism includes:
a first surface along which the resin is supplied to the fiber bundle before the fiber bundle is wound around the liner; and
a second surface that faces the first surface and sandwiches the fiber bundle between the first surface and the second surface before the fiber bundle is wound around the liner.

2. The manufacturing device according to claim 1, further comprising a vibration mechanism configured to apply vibration to the resin in a region sandwiched between the first surface and the second surface.

3. The manufacturing device according to claim 1, wherein:
the first surface has a plurality of resin supply ports; and
the impregnation mechanism is configured to supply the resin to the fiber bundle from the resin supply ports.

4. The manufacturing device according to claim 3, wherein the resin supply ports are arranged along a direction in which the fiber bundle moves toward the liner.

5. A manufacturing method for manufacturing a pressure tank by winding a fiber bundle around a surface of a liner that is a hollow body, the manufacturing method comprising:
impregnating the fiber bundle with resin; and
winding the fiber bundle impregnated with the resin around the surface of the liner, wherein
the impregnating includes causing the fiber bundle to pass between a first surface along which the resin is supplied to the fiber bundle and a second surface that faces the first surface to sandwich the fiber bundle between the first surface and the second surface.
